# EUROPEAN PATENT APPLICATION

(11) **EP 4 180 470 A1**
(43) Date of publication of application: **17.05.2023**
(21) Application number: 21842287.1
(22) Date of filing: 12.07.2021
(51) Int. Cl.: C08F 255/02, C08J 3/205, C08L 1/00, C08L 23/12, C08L 51/00, C08J 5/04

(54) **CELLULOSE-FIBER-REINFORCED MOLDED RESIN OBJECT AND PRODUCTION METHOD THEREFOR**

(30) Priority: 13.07.2020 JP 2020119781
(71) Applicant: FURUKAWA ELECTRIC CO., LTD., Chiyoda-ku Tokyo 100-8322 (JP)
(72) Inventor: SATAKE, Mayu, Tokyo 100-8322 (JP); IKURA, Yukihiro, Tokyo 100-8322 (JP); ITO, Suzune, Tokyo 100-8322 (JP); NAKAJIMA, Yasuo, Tokyo 100-8322 (JP); SUYAMA, Kenichi, Tokyo 100-8322 (JP); TANAKA, Hiroki, Tokyo 100-8322 (JP); TOMOMATSU, Isao, Tokyo 100-8322 (JP); HAMURO, Yui, Tokyo 100-8322 (JP)
(74) Representative: Forstmeyer, Dietmar
(86) International application number: PCT/JP2021/026172
(87) International publication number: WO 2022/014539

(57) **Abstract**

A cellulose fiber reinforced resin formed body, which is obtainable by molding a cellulose fiber reinforced resin composition containing a polypropylene resin, an alkoxysilane-modified polypropylene resin, and a cellulose fiber; and
a method of producing the same.

## Description

### FIELD OF THE INVENTION

The present invention relates to a cellulose fiber reinforced resin formed body and a method of producing the same.

### BACKGROUND OF THE INVENTION

A cellulose fiber is a natural resource that is included in every plant, and thus, may be considered as inexhaustible, and has also been examined for an application in automobile components and structural materials by being compounded with a resin, since it is light in weight and high in strength.

However, for a practical application of a cellulose fiber reinforced resin, it is necessary to sufficiently enhance an integrity between the cellulose fiber high in hydrophilicity and a resin high in hydrophobicity, such as a polyolefin resin, and an improvement in strengthening (reinforcement) effect of the resin by the cellulose fiber is limited.

In order to enhance the strengthening effect by the cellulose fiber, there has recently been proposed to improve an adherence in an interface between the cellulose fiber and the hydrophobic resin by adding a compatibilizer, such as maleic anhydride-modified polyolefin.

For example, Patent Literature 1 proposes to obtain a fiber-reinforced resin using polyolefin modified with a carboxyl group or carboxyl derivative group containing unsaturated compound in addition to a polyolefin resin and a plant fiber.

Patent Literature 3 proposes to obtain a fiber-reinforced resin using a modified polypropylene resin in which an unsaturated carboxylic acid or its anhydride or derivative is grafted in addition to a polypropylene resin and a cellulose fiber.

Patent Literature 4 proposes to obtain a fiber-reinforced resin using an epoxy-modified polyolefin resin in addition to a polyolefin resin and a cellulose fiber.

Patent Literature 5 proposes to obtain a fiber-reinforced resin using a mixture or a reaction composition of a cellulose-based material, a silane-containing polymer, and a thermoplastic resin, and proposes to use a copolymer of α-olefin and ethylenically unsaturated silane as the silane-containing polymer.

Patent Literature 6 proposes to obtain a fiber-reinforced resin by kneading a bound substance of a synthetic polymer in which an alkoxysilane monomer is graft polymerized and a natural plant fiber, and a synthetic polymer.

Meanwhile, Patent Literature 2 proposes to use a cellulose fiber with its surface processed with a silane coupling agent when the cellulose fiber and a resin are compounded.

### CITATION LIST

### PATENT LITERATURES

Patent Literature 1: JP-A-8-283475 ("JP-A" means an unexamined published Japanese patent application)
Patent Literature 2: Japanese Patent No. 5322470
Patent Literature 3: Japanese Patent No. 5578854
Patent Literature 4: Japanese Patent No. 6052167
Patent Literature 5: Japanese Patent No. 5128955
Patent Literature 6: WO 20081053817

### SUMMARY OF THE INVENTION

### TECHNICAL PROBLEM

Automobile components, structure materials, and the like are required to be light in weight and high in strength. Moreover, most of these are assumed to be used outdoor or used under a severe environment, and therefore, are required to have a durability that ensures maintaining a desired high strength even though they are exposed to a high temperature and high humidity condition or a rainy weather over a long period of time. The inventors have examined the cellulose fiber reinforced resins described in the above-described patent literatures, and they started to know that there is a room for improvement in mechanical strength and long durability under a high temperature and high humidity.

The present invention contemplating providing a cellulose fiber reinforced resin formed body that is excellent in mechanical strength and ensures achieving a sufficiently high mechanical strength even though it is exposed to a severe condition of high temperature and high humidity over a long period of time, and a method of producing the same.

### MEANS FOR SOLVING THE PROBLEMS

The inventors have examined to solve the above-described technical problem from a viewpoint of a used compatibilizer in relation to a cellulose fiber reinforced resin formed body containing a cellulose fiber and a polypropylene resin, and have found that an application of an alkoxysilane-modified polypropylene resin as a compatibilizer ensures effectively enhancing a mechanical strength of a cellulose fiber reinforced resin formed body to be obtained, and furthermore, that this formed body is less likely to have a degradation in mechanical strength even though it is exposed to an environment with high temperature and high humidity over a long period of time. The present invention has reached a completion after repeating further examinations based on the knowledge.

That is, the above-described problem of the present invention has been solved by the following means:
[1] A cellulose fiber reinforced resin formed body, which is obtainable by molding a cellulose fiber reinforced resin composition, the cellulose fiber reinforced resin composition containing:
   a polypropylene resin,
   an alkoxysilane-modified polypropylene resin, and
   a cellulose fiber.
[2] The cellulose fiber reinforced resin formed body described in [1], wherein the alkoxysilane-modified polypropylene resin is a graft-modified product of a polypropylene resin which is obtainable by using a silane coupling agent having a group containing an ethylenically unsaturated group and an alkoxysilyl group.
[3] The cellulose fiber reinforced resin formed body described in [2], wherein the silane coupling agent is vinyltrimethoxysilane.
[4] The cellulose fiber reinforced resin formed body described in [2], wherein the silane coupling agent is (trimethoxysilyl)alkyl (meth)acrylate.
[5] The cellulose fiber reinforced resin formed body described in [4], wherein the alkoxysilane-modified polypropylene resin is a graft-modified product of a polypropylene resin which is obtainable by using the silane coupling agent and a reaction aid having a vinyl group.
[6] The cellulose fiber reinforced resin formed body described in [5], wherein the reaction aid having a vinyl group has a Q-value of 0.010 to 5.00.
[7] The cellulose fiber reinforced resin formed body described in Claim 5, wherein the reaction aid having a vinyl group has a Q-value of 0.54 to 5.00.
[8] The cellulose fiber reinforced resin formed body described in any one of [5] to [7], wherein the reaction aid having a vinyl group is at least one kind of a styrene compound and a (meth)acrylate compound.
[9] The cellulose fiber reinforced resin formed body described in any one of [5] to [8], wherein the reaction aid having a vinyl group is a styrene compound.
[10] The cellulose fiber reinforced resin formed body described in any one of [1] to [9], wherein, in the cellulose fiber reinforced resin formed body, a content of the alkoxysilane-modified polypropylene resin is 0.1 to 20 mass%.
[11] A method of producing the cellulose fiber reinforced resin formed body described in any one of [1] to [9], including the following steps (a) and (b):
   (a) a step of mixing a polypropylene resin and a silane coupling agent in a presence of an organic peroxide at a decomposition temperature or more of the organic peroxide to cause the silane coupling agent to develop a grafting reaction to the polypropylene resin, thereby preparing an alkoxysilane-modified polypropylene resin, and
   (b) a step of melt-mixing the alkoxysilane-modified polypropylene resin, a cellulose fiber, and a polypropylene resin with a proportion of the alkoxysilane-modified polypropylene resin to a total quantity of the alkoxysilane-modified polypropylene resin, the cellulose fiber, and the polypropylene resin being 0.1 to 20 mass%.
[12] The method of producing the cellulose fiber reinforced resin formed body described in [11], wherein the preparation of the alkoxysilane-modified polypropylene resin is performed in a presence of a reaction aid having a vinyl group.
[13] The method of producing the cellulose fiber reinforced resin formed body described in [12], wherein the preparation of the alkoxysilane-modified polypropylene resin is performed in a presence of a styrene compound.

In the description of the present invention, the term "to" is used to mean that numerical values written before and after it are included as a lower limit value and an upper limit value.

### EFFECTS OF THE INVENTION

The cellulose fiber reinforced resin formed body of the present invention exhibits an excellent tensile strength and ensures achieving a sufficiently high mechanical strength even though it is exposed to an environment with high temperature and high humidity over a long period of time, thereby being excellent in long-term reliability. The method of producing the cellulose fiber reinforced resin formed body of the present invention is a method appropriate for producing the above-described cellulose fiber reinforced resin formed body.

### MODE FOR CARRYING OUT THE INVENTION

### [Resin Formed Body]

The cellulose fiber reinforced resin formed body of the present invention (hereinafter also referred to as a "resin formed body of the present invention") is a resin formed body formed by molding a cellulose fiber reinforced resin composition containing a polypropylene resin, an alkoxysilane-modified polypropylene resin, and a cellulose fiber. The resin formed body has a shape that can be set according to its usage.

The cellulose fiber reinforced resin composition constituting the resin formed body of the present invention contains at least a part of a condensate of the alkoxysilane-modified polypropylene resin and the cellulose fiber. More specifically, the cellulose fiber reinforced resin composition constituting the resin formed body of the present invention contains a condensate obtained by a dealcoholization condensation reaction of an alkoxysilyl group in the alkoxysilane-modified polypropylene resin and a hydroxyl group in the cellulose fiber and/or a condensate obtained by a dehydration condensation of a silanol group generated by hydrolysis of the alkoxysilyl group in the alkoxysilane-modified polypropylene resin and a hydroxyl group or the like in the cellulose fiber. In view of this, an adherence in an interface between the alkoxysilane-modified polypropylene resin and the cellulose fiber can be sufficiently enhanced, and as the result, dispersibility of the cellulose fiber is enhanced in the resin formed body, and thus, the strengthening effect of the cellulose fiber can be effectively brought out. Furthermore, the cellulose fiber reinforced resin composition constituting the resin formed body of the present invention may contain a condensate by a dealcoholization/dehydration condensation reaction of the alkoxysilyl group/the silanol group. In this case, it is possible to form a network via a reaction site between the alkoxysilane-modified polypropylene resin and the cellulose fiber. The cellulose fiber reinforced resin composition constituting the resin formed body of the present invention may contain an alkoxysilane-modified polypropylene resin that has not developed the dealcoholization/dehydration condensation reaction and a cellulose fiber that has not developed the dealcoholization/dehydration condensation reaction. Furthermore, the alkoxysilyl group/the silanol group and the cellulose fiber described above may be bound by hydrogen bonding or the like in addition to the dealcoholization/dehydration condensation reaction.

The following describes components of the cellulose fiber reinforced resin composition constituting the resin formed body of the present invention and materials used when the resin formed body is prepared.

### (Polypropylene Resin)

For a polypropylene resin (hereinafter also referred to as a polypropylene resin A) in the cellulose fiber reinforced resin composition constituting the resin formed body of the present invention, a polypropylene resin conventionally used for automobile components, structure materials, and the like can be used without any specific limitation. In the present invention, the polypropylene resin A may be a base resin.

The polypropylene means to include an ethylene-propylene copolymer (a random copolymer and a block copolymer) besides a homopolymer of propylene.

### (Alkoxysilane-modified polypropylene resin)

The alkoxysilane-modified polypropylene resin acts as a compatibilizer between the base resin and the cellulose fiber.

The alkoxysilane-modified polypropylene resin is not specifically limited as long as it is a polypropylene resin having an alkoxysilyl group in its main chain or at its end. The alkoxysilane-modified polypropylene resin may be a resin prepared by modifying a polypropylene resin with a silane coupling agent having an alkoxysilyl group (an alkoxysilane compound). That is, the alkoxysilane-modified polypropylene resin can be a resin obtained by the silane coupling agent having the alkoxysilyl group developing a grafting reaction to the polypropylene resin. The alkoxysilane-modified polypropylene resin is preferably a graft-modified product of the polypropylene resin by the silane coupling agent having a group containing an ethylenically unsaturated group and an alkoxysilyl group described later. The alkoxysilane-modified polypropylene resin can be synthesized by a usual method or a commercial product may be used.

For the polypropylene resin before the modification used for preparing the above-described alkoxysilane-modified polypropylene resin, a polypropylene resin that has a site that can develop a grafting reaction of a silane coupling agent described later and a part that can develop a grafting reaction under a presence of an organic peroxide is preferred. Such sites that can develop a grafting reaction are not specifically limited, but examples include, for example, an unsaturated bond site in a carbon chain and carbon atoms with hydrogen atoms.

For a raw material of the polypropylene resin used for preparing the above-described alkoxysilane-modified polypropylene resin, the above-described polypropylene resin A can be used.

The silane coupling agent used for preparing the above-described alkoxysilane-modified polypropylene resin is preferably an alkoxysilane compound having a functional group for grafting. For the silane coupling agent, an agent that has a site (a group or an atom) that can develop a grafting reaction to the polypropylene resin under a presence of radicals generated by decomposition of the organic peroxide and an alkoxysilyl group can be used. Examples of the site that can develop a grafting reaction to the polypropylene resin include a group that contains an ethylenically unsaturated group. Examples of the group containing an ethylenically unsaturated group are not specifically limited, but include, for example, a vinyl group, an allyl group, a (meth)acryloyloxy group, a (meth)acryloyloxy alkylene group, and a p-styryl group. For the alkoxysilyl group, any form of a trialkoxysilyl group, a dialkoxysilyl group, and a monoalkoxysilyl group may be used and it is preferred to use a trialkoxysilane compound. An alkoxy group of the alkoxysilyl group is preferred to have 1 to 6 carbon atoms, and is more preferably a methoxy group and an ethoxy group. For the silane coupling agent, an agent having a group containing an ethylenically unsaturated group and an alkoxysilyl group is preferred. One kind or two or more kinds of the silane coupling agents may be used.

Specific examples of the above-described silane coupling agent include: vinyl silane compounds, such as vinyltrimethoxysilane, vinyltriethoxysilane, vinyltributoxysilane, vinyldimethoxyethoxysilane, vinyldimethoxybutoxysilane, vinyldiethoxybutoxysilane, allyltrimethoxysilane, allyltriethoxysilane, vinyltriacetoxysilane, and trimethoxy(4-vinylphenyl)silane; (meth)acrylic silane compounds, such as 3-(trimethoxysilyl)propyl (meth)acrylate, 3-(methyldimethoxysilyl)propyl (meth)acrylate, 3-(methyldiethoxysilyl)propyl (meth)acrylate, 3-(triethoxysilyl)propyl (meth)acrylate, and 3-(methoxydimethylsilyl)propyl (meth)acrylate; and the like.

Among all, vinyltrimethoxysilane or (trimethoxysilyl)alkyl (meth)acrylate is specifically preferred, and at least one kind of (trimethoxysilyl)alkyl (meth)acrylate and vinyltrimethoxysilane can be used. An alkyl group in the (trimethoxysilyl)alkyl (meth)acrylate is preferred to have 1 to 10 carbon atoms, is more preferred to have 1 to 6 carbon atoms, further preferred to have 2 to 4 carbon atoms, and specifically preferably propyl. From an aspect of enhancing a tensile strength, it is preferred to use 3-(trimethoxysilyl)propyl methacrylate.

For an organic peroxide used for preparing the above-described alkoxysilane-modified polypropylene resin, a compound that generates radicals at least by pyrolysis can be used. These radicals pull out hydrogen atoms from the polypropylene resin or the silane coupling agent to generate a radical reaction (a grafting reaction, an addition reaction) between the silane coupling agent and the polypropylene resin, thereby generating the alkoxysilane-modified polypropylene resin.

For the organic peroxide, those usually used in a radical polymerization reaction can be widely used. For example, benzoyl peroxide, dicumyl peroxide (DCP), 2,5-dimethyl-2,5-di-(tert-butylperoxy)hexane, or 2,5-dimethyl-2,5-di-(tert-butylperoxy)hexane-3 is preferred. One kind or two or more kinds of the organic peroxides may be used.

A decomposition temperature of the organic peroxide is preferably 80°C to 195°C, and is particularly preferably 125°C to 180°C. In the present invention, the decomposition temperature of the organic peroxide means a temperature (a one-minute half-life temperature) at which, when an organic peroxide of a single composition is heated, the organic peroxide itself is decomposed into two or more kinds of compounds at a certain constant temperature or temperature range in one minute to have half a density (mass). Specifically, it can be obtained by thermal analysis, such as a DSC method.

In the preparation of the alkoxysilane-modified polypropylene resin, a grafting rate of the silane coupling agent to the polypropylene resin is not specifically limited as long as it is in a range within which advantageous effects of invention are not impaired. The grafting rate of the silane coupling agent to the alkoxysilane-modified polypropylene resin is, for example, preferably 0.1 to 20 mass%, more preferably 1 to 5 mass%, and particularly preferably 2 to 5 mass%. The grafting rate means the number of mass parts (%) of a graft structure to 100 mass parts (100%) of polypropylene.

The grafting rate can be set within a predetermined range according to a kind or a content of the organic peroxide, kinds and usages of the polypropylene resin and the silane coupling agent as raw materials, and the like.

As for the grafting rate, the alkoxysilane-modified polypropylene resin heated to be melted in a hot xylene is dripped into acetone and reprecipitated to remove an unreacted monomer component and the alkoxysilane-modified polypropylene resin thus reprecipitated and purified is measured by FT-IR, and thus, the graft structure grafted to 100 mass% of the polypropylene can be calculated in a mass% conversion from the intensity ratio of a peak derived from the polypropylene to a peak derived from the graft structure. As for the peaks derived from the alkoxysilyl group in the FT-IR, a peak derived from a Si-O asymmetric stretching vibration can be detected in the proximity of 1100 cm⁻¹, a peak derived from a Si-O bending vibration can be detected in the proximity of 803 cm⁻¹, and a peak derived from a Si-C stretching vibration can be detected at 1193 cm⁻¹.

Preferred forms of the above-described alkoxysilane-modified polypropylene resin can be separated into an aspect (a first aspect) of the alkoxysilane-modified polypropylene resin prepared using a vinyl silane compound and an aspect (a second aspect) of the alkoxysilane-modified polypropylene resin prepared using a (meth)acrylic silane compound from the aspect of the kind of the silane coupling agent used for the preparation.

The alkoxysilane-modified polypropylene resin may have a reaction aid having a vinyl group further grafted to its main chain. While this form can be employed for both the alkoxysilane-modified polypropylene resins of the first aspect and the second aspect, it is preferred to be employed when the alkoxysilane-modified polypropylene resin is of the second aspect.

For the reaction aid having a vinyl group, it is not specifically limited as long as it is a compound (except for those corresponding to the above-described silane coupling agent) having a vinyl group and having a substituent with a resonance stabilization effect for radicals. Here, the compound means not to include a form having a main chain having a recurring unit in its structure.

A Q-value of the reaction aid having a vinyl group is not specifically limited, and can be 0.010 or more, preferably 0.49 to 5.00, more preferably 0.54 to 5.00, more preferably 0.54 to 4.38, more preferably 0.8 to 4.38, and more preferably 0.96 to 4.38. Here, the Q-value means a parameter relating to a resonance effect of a monomer in a radical copolymerization reaction by two kinds of monomers. In the present invention, specific Q-values of the respective reaction aids are based on the descriptions in documents, such as "Plastic Material Dictionary" Q-e value (https://www.plastics-material.com/q-e%e5%80%a4/). For the significance of the Q-value in the radical polymerization reaction, Takayuki OTSU, Structure and Reactivity of Monomers, Relationship between Empirical Parameters and Radical Polymerization Reactivities, Synthetic Organic Chemistry, Volume 28 Issue 12, pp. 1183 to 1196, 1970 can be referred to. This document describes that a conjugated monomer with a large Q-value is high in reactivity as a monomer in one hand, its radical is low in reactivity and a non-conjugated monomer with a small Q-value is low in reactivity as a monomer in one hand, its radical is high in reactivity. It is also described, for example, that the Q-value can be calculated from a reaction rate constant of a propagation reaction in the radical copolymerization reaction with styrene using the styrene as a reference of 1.0. By referring to a method described in this document, Q-values of compounds whose Q-values are not described in the documents, such as "Plastic Material Dictionary" described above, can be obtained.

The following describes specific examples of the reaction aids having the vinyl group with their Q-values. Parts of the reaction aids do not have the Q-values described.

For the reaction aid having a vinyl group, specifically, a styrene compound, a vinylpyridine compound, acrylonitrile (Q-value: 0.48), a (meth)acrylate compound, a (meth)acrylamide compound, fatty acid vinyl ester, or the like can be used.

Examples of the styrene compound include styrene (Q-value: 1.00), 2-methylstyrene, 3-methylstyrene (Q-value: 1.57), 4-methylstyrene (Q-value: 1.10), α-methylstyrene (Q-value: 0.97), and the like.

Examples of the vinylpyridine compound include 4-vinylpyridine (Q-value: 2.47) and the like.

Examples of the (meth)acrylate compound include glycidyl methacrylate (Q-value: 0.96), 2-hydroxypropyl methacrylate (Q-value: 4.38), and the like.

Examples of the fatty acid vinyl ester include vinyl laurate (Q-value: 0.011) and the like.

From the aspect of enhancing the mechanical strength, the reaction aid having a vinyl group is preferably a reaction aid with a Q-value of 0.54 to 5.00.

From the aspect of enhancing the mechanical strength, the reaction aid having a vinyl group is preferably a styrene compound or a (meth) acrylic acid ester compound.

A grafting rate of the reaction aid having a vinyl group in the alkoxysilane-modified polypropylene resin is preferably 0.1 to 20 mass%, and more preferably 1 to 5 mass%. As for the grafting rate of the reaction aid having a vinyl group, the alkoxysilane-modified polypropylene resin heated to be melted in a hot xylene is dripped into acetone and reprecipitated to remove an unreacted monomer component and is measured by FT-IR, and thus, a monomer amount of the reaction aid having a vinyl group grafted to the polypropylene can be calculated in a mass% conversion.

In the alkoxysilane-modified polypropylene resin in which the reaction aid having a vinyl group is made coexisted in the grafting reaction, it is considered that the resin is stabilized and the grafting reaction of the silane coupling agent is optimized. While the reason is not clear, it is considered that a contributory factor is that, when the alkoxysilane-modified polypropylene resin is prepared, these reaction aids are grafted to the polypropylene resin to resonance-stabilize polymer radicals generated in the polypropylene resin to reduce a chain break of the polypropylene as a side reaction of the grafting reaction, and the copolymerization reaction with the (meth)acrylic silane compound enhances an introduction efficiency of the silane coupling agent.

### (Cellulose Fiber)

Derivations of the cellulose fibers for use in the present invention are not specifically limited, and specific examples thereof include cellulose fibers obtained using, for example, wood, bamboo, hemp, jute, kenaf, agricultural product remains or wastes (for example, straw of wheat or rice plant, corn, stalks of cotton, and sugar cane), cloth, regenerated pulp, and waste paper as a raw material. The pulp is also a raw material for paper and consists primarily of a tracheid which is extracted from a plant. From a chemical viewpoint, a primary constituent of the pulp is a polysaccharide and its primary constituent is cellulose. As the cellulose fiber for use in the present invention, the cellulose fiber derived from wood is particularly preferred.

The above-described cellulose fibers are not specifically limited and the cellulose fiber obtained by any desired production method can be used. For example, specific examples thereof include cellulose fibers obtained by mechanical processing that performs a grinding process with a physical force, or by chemical processing, such as the kraft pulp method, the sulfide pulp method, and the alkaline pulp process, or by combined use of such processings. In the above-described chemical processing, using a chemical, such as a caustic soda, and the like, lignin, hemicellulose, and the like can be removed from a plant material, such as wood, to extract almost pure cellulose fiber. The cellulose fiber thus obtained is also referred to as a pulp fiber.

From the point of improving the mechanical property, the cellulose fiber for use in the present invention is preferably a cellulose fiber prepared by chemical processing, and more preferably a cellulose fiber prepared by a kraft pulp method. The cellulose fiber included in the resin formed body of the present invention may be of one kind or may be of two or more kinds.

A cross section of the cellulose fiber for use in the present invention has a diameter of preferably 1 to 30 µm, more preferably 1 to 25 µm, and further preferably 5 to 20 µm. The length (fiber length) of the cellulose fiber is preferably 10 to 2,200 µm, and more preferably 50 to 1,000 µm.

The above diameter of the cellulose fiber contained in the resin formed body of the present invention can be measured by a scanning electron microscope (SEM) and a fiber analyzer. The fiber length of the cellulose fiber also can be measured by the SEM observation. In the measurement of the fiber length by the SEM observation, a residue after eluting a resin component in a resin formed body of the present invention by using a hot xylene is placed on a stage, and processing, such as vapor deposition, is performed, thus allowing measurement of the fiber length by the SEM observation.

### (Contents of Respective Components)

A content of the polypropylene resin A in the resin formed body of the present invention is preferably 30 to 99 mass%, more preferably 50 to 99 mass%, more preferably 60 to 99 mass%, and further preferably 70 to 95 mass%.

A content of the alkoxysilane-modified polypropylene resin in the resin formed body is preferably 0.1 to 20 mass%, more preferably 0.5 to 20 mass%, further preferably 1 to 20 mass%, further preferably 1 to 10 mass%, and further preferably 1 to 5 mass%. Note that the content of the alkoxysilane-modified polypropylene resin in the resin formed body is a total amount of the alkoxysilane-modified polypropylene resin in a form that forms a dehydration condensation product with the cellulose fiber and the alkoxysilane-modified polypropylene resin that does not form a dehydration condensation product with the cellulose fiber. While it depends on contents of other components, increasing the content of the alkoxysilane-modified polypropylene resin tends to increase the initial mechanical strength, but on the other hand, tends to reduce the durability under a high temperature and high humidity.

A content of the cellulose fiber in the resin formed body of the present invention is preferably 0.9 to 50 mass%, preferably 1 to 50 mass%, more preferably 1 to 30 mass%, and more preferably 5 to 30 mass%. While it depends on contents of other components, increasing the content of the cellulose fiber tends to increase the initial mechanical strength, but on the other hand, tends to reduce the durability under a high temperature and high humidity.

From an aspect of increasing the initial tensile strength, the contents of the respective components in the resin formed body of the present invention is also preferred to be as follows.

That is, the content of the polypropylene resin A is also preferred to be 25 to 95 mass%, also preferred to be 30 to 90 mass%, and also preferred to be 30 to 87 mass%. The content of the alkoxysilane-modified polypropylene resin is also preferred to be 2 to 25 mass%, and also preferred to be 3 to 20 mass%. The content of the cellulose fiber is also preferred to be 1 to 60 mass%, also preferred to be 3 to 50 mass%, also preferred to be 5 to 50 mass%, also preferred to be 7 to 50 mass%, and also preferred to be 8 to 50 mass%. A value of a ratio (mass ratio) of the content of the cellulose fiber to the content of the alkoxysilane-modified polypropylene resin is preferably [content of cellulose fiber]/[alkoxysilane-modified polypropylene resin] = 0.1 to 20, more preferably [content of cellulose fiber]/[alkoxysilane-modified polyolefin resin] = 1 to 10, and further preferably [content of cellulose fiber]/[alkoxysilane-modified polypropylene resin] = 2 to 8.

### (Other Components)

The resin formed body of the present invention may have an embodiment formed of the polypropylene resin A, the alkoxysilane-modified polypropylene resin, and the cellulose fiber as described above, and also may contain the following components and the like within a range that does not impair the advantageous effects of invention.

For example, an elastomer, such as an ethylene-α-olefin copolymer, may be additionally compounded to modify a physical property of the resin formed body.

The resin formed body of the present invention can appropriately contain an antioxidant, a light stabilizer, a radical scavenger, an ultraviolet absorber, a colorant (dye, organic pigment, inorganic pigment), a filler, a slipping agent, a plasticizer, a processing aid such as an acrylic processing aid, a foaming agent, a lubricant such as paraffin wax, a surface treatment agent, a nucleating agent, a releasing agent, a hydrolysis inhibitor, an anti-blocking agent, an antistatic agent, an anticlouding agent, a fungicidal agent, an ion trapping agent, a flame retardant, and a flame retardant aid within a range that does not impair the above-described objects.

For example, in the case where it is produced by a preferred method of producing the resin formed body of the present invention described later, the resin formed body of the present invention may contain or need not contain a hydrophilic compound, such as water and maleic anhydride.

### (Confirmation and Determination Method for Presence/Absence of Cellulose Fiber Content)

The presence/absence of the content of the cellulose fiber in the resin formed body of the present invention can be confirmed as follows.

It has been known that cellulose of a cellulose fiber adopts various crystalline structures, such as a type I and a type II. Natural cellulose has a crystalline structure of a type I_{α} (triclinic crystal) and a type I_{β} (monoclinic crystal), and plant-derived cellulose generally contains a lot of type I_{β} crystals.

The resin formed body of the present invention has the diffraction peak at the position of the scattering vector s of 3.86 ± 0.1 nm⁻¹ in the wide-angle X-ray diffraction measurement. This diffraction peak is derived from a (004) plane of the I_{β} type crystal of the cellulose. That is, in the resin formed body of the present invention, at least a part of the cellulose of the cellulose fiber has the crystalline structures, and at least a part of them is the I_{β} type crystal. The crystalline structures other than the I_{β} type crystal in the crystalline structures of the cellulose are not specifically limited. Hereinafter, the cellulose fiber is referred to as a "component having the diffraction peak at the position of the scattering vector s of 3.86 ± 0.1 nm⁻¹" in some cases.

Containing the cellulose fiber can be confirmed by various methods. For example, it can be confirmed by observing the diffraction peak derived from cellulose crystal in the cellulose fiber using the X-ray. While it is necessary to be careful because the diffraction peak position differs depending on the wavelength of the X-ray used, the diffraction peak derived from the (004) plane of the I_{β} type crystal of the cellulose can be observed in the proximity of the scattering vector s of 3.86 nm⁻¹ (2θ = 34.6°) when the CuKα ray (λ = 0.15418 nm) is used. For capturing the diffraction of the (004) plane, the X-ray needs to be incident on a sample that is rotated by a degree of θ. That is, when the CuKα ray is used, a sample stage is to be rotated by θ = 17.3°. For the diffraction peak derived from the cellulose crystal, while other diffraction peaks can be observed inside the (004) plane, since their diffraction positions overlap with that of a diffraction peak derived from polypropylene, it is not allowed to determine them as definite diffraction peaks in some cases. In view of this, in this description, the presence/absence of the cellulose fiber is determined using the diffraction peak of the I_{β} type crystal (004) plane of the cellulose.

### [Method of Producing Resin Formed Body]

The resin formed body of the present invention can be obtained by, at least, melt-mixing the polypropylene resin A, the alkoxysilane-modified polypropylene resin, and the cellulose fiber, and molding the obtained molten mixture (the cellulose fiber reinforced resin composition). That is, the method of producing the resin formed body of the present invention includes a step of melt-mixing the polypropylene resin A, the alkoxysilane-modified polypropylene resin, and the cellulose fiber, and molding the resultant. Melt-mixing causes the alkoxysilyl group in the alkoxysilane-modified polypropylene resin to develop a dealcoholization condensation reaction with the hydroxyl group of the cellulose fiber, and/or causes the silanol group generated by hydrolysis of the alkoxysilyl group in the alkoxysilane-modified polypropylene resin, the hydroxyl group of the cellulose fiber, and the like to have a dehydration condensation. The condensation reaction of them enhances the adherence (integrity) between the alkoxysilane-modified polypropylene resin and the cellulose fiber, and thus, the dispersibility of the cellulose fiber in the polypropylene resin A and the strengthening effect of the cellulose fiber can be effectively enhanced.

In order to efficiently enhance the strengthening effect of the above-described cellulose fiber, a catalyst that accelerates the above-described condensation may be used.

Respective combined amounts of the polypropylene resin A, the alkoxysilane-modified polypropylene resin, and the cellulose fiber in the melt-mixing are combined amounts to be the contents in the resin formed body as described above.

While the temperature in the step of the melt-mixing is not specifically limited insofar as the melt-mixing temperature is a temperature of the melting point of the resin or more, and, for example, the melt-mixing temperature can be set to 160°C to 230°C, and more preferably 170°C to 210°C.

From the aspect of reducing pyrolysis of the cellulose fiber, more preferably, the melt-mixing temperature is preferably 250°C or less, more preferably 230°C or less, and further preferably 200°C or less.

In performing the melt-mixing step at high temperature, the melt-mixing may be performed by adding an additive such as an antioxidant, for example, for the purpose of suppressing a thermal degradation and an oxidative degradation.

The melt-mixing time is not specifically limited, and can be appropriately set.

A device used in the above-described melt-mixing is not specifically limited as long as it can perform the melt-mixing at the melting point of the resin component or higher temperature, and examples of the device includes, for example, a blender, a kneader, a mixing roll, a banbury mixer, a single-screw or twin-screw extruder, and the like, and the twin-screw extruder is preferred.

From the aspect of handleability in a subsequent forming step, the obtained melt-mixed product is preferably processed into a pellet form (hereinafter, the obtained pellet is also simply referred to as a "pellet"). The conditions for pellet processing are not specifically limited, and it can be processed according to a usual method. For example, a method in which, after water cooling the melt-mixed product, the melt-mixed product is processed into a pellet form using a strand cutter or the like is included as an example.

Note that, before the melt-mixing, each of the components may be dry-blended (mixed in advance). Dry-blending is not specifically limited, and can be performed according to a usual method.

In order to improve a dispersion state of the cellulose in the base resin when the above-described melt-mixing is performed, before the melt-kneading, the alkoxysilane-modified polypropylene resin and the cellulose fiber may be premixed at a temperature less than a melting point of the alkoxysilane-modified polypropylene resin or may be melt-mixed in a presence of a cellulose dispersing agent. When the melt-mixing is performed in the presence of the cellulose dispersing agent, the cellulose dispersing agent is added into a mixer (for example, an extruder) and can be recovered from a vent. For the cellulose dispersing agent, water and maleic anhydride are preferred, and it is more preferred to use water as it is low in separation, recovery, and environmental loads and poses fewer negative effects to the cellulose in case it remains.

The method for molding the above-described molten mixture is not specifically limited as long as it is a method that can mold the above-described molten mixture into a desired shape. For example, there are a method for melt compression molding the molten mixture, a method for injection molding the molten mixture, and the like. The molten mixture may be molded into a desired shape after it is processed into a pellet form. In the present invention, it is preferred that, after the molten mixture is processed into a pellet form, it is injection molded, thereby obtaining the formed body.

The molding can be performed simultaneously or continuously with the melt-mixing. That is, examples include an aspect in which the respective components are melt-mixed during the melt molding, for example, during the injection molding, or immediately before it. For example, a sequence of steps of melt-mixing these components in a molding apparatus, subsequently, injecting it to mold into a desired shape can be employed.

In the above-described injection molding, an injection temperature is not specifically limited as long as it is a temperature equal to or more than a melting point of the polypropylene resin, and, for example, when the polypropylene resin is used, it can be 160°C to 230°C, and preferably 170°C to 210°C.

From an aspect of reducing the pyrolysis of the cellulose fiber, the above-described injection temperature is preferably 250°C or less, more preferably 230°C or less, and further preferably 200°C or less.

The condition, such as an injection speed, a mold temperature, pressure keeping, and period for the pressure keeping in the above-described injection molding can be appropriately adjusted depending on the purpose.

In the above-described melt compression molding, a melt compression temperature is not specifically limited as long as it is a temperature equal to or more than a melting point of the polypropylene resin, and for example, when the polypropylene resin is used, it can be 160°C to 230°C, and preferably 170°C to 210°C.

From an aspect of reducing the pyrolysis of the cellulose fiber, the above-described melt compression temperature is preferably 250°C or less, more preferably 230°C or less, and further preferably 200°C or less.

The condition such as a preheating time, a pressurization time, and a pressure in the melt compression molding can be appropriately adjusted, depending on the purpose.

The apparatus used in the melt compression molding is not specifically limited, and for example, a pressing machine is included. In addition, for example, a sheeting apparatus using an extruder for sheet molding may be used.

While the shape of the sheet is not specifically limited, for example, the sheet can be processed in a dumbbell shape. The width, the length, the thickness, and the like can be appropriately adjusted such that the stretching is easily performed. For example, the thickness of the sheet is preferably 2 mm or less, and more preferably 1 mm or less.

The preparation of the alkoxysilane-modified polypropylene resin can be performed by causing the silane coupling agent to develop a grafting reaction to the polypropylene resin in a presence of the radicals generated by the decomposition of the organic peroxide. That is, it can be prepared by melt-mixing the polypropylene resin and the silane coupling agent in the presence of the organic peroxide at a temperature equal to or more than a decomposition temperature of the organic peroxide.

The raw materials (the polypropylene resin, the silane coupling agent, and the organic peroxide) used in this preparation are as described above.

The temperature at which the above-described respective components are melt-mixed is equal to or more than the decomposition temperature of the organic peroxide, and preferably a temperature of [decomposition temperature of organic peroxide + 25°C] to [decomposition temperature of organic peroxide + 110°C]. Within the above-described mixing temperature, the above-described components are melted and the organic peroxide is decomposed to generate the radicals, and thus, the necessary grafting reaction sufficiently progresses. While it depends on the used raw materials, the melt-mixing temperature can be 160°C to 300°C, can also be 170°C to 250°C, and can also be 180°C to 210°C. Other conditions, for example, a mixing period can be appropriately set considering the efficiency and the purpose.

For the kneader used for the mixing, for example, a single-screw extruder, a twin-screw extruder, a roll, a banbury mixer, or various kinds of kneaders is used.

In the preparation of the alkoxysilane-modified polypropylene resin, a mixing amount of the silane coupling agent to 100 mass parts of the polypropylene resin as the raw material is preferably 0.1 to 20 mass parts, more preferably 1 to 10 mass parts, more preferably 2 to 8 mass parts, and further preferably 2 to 6 mass parts.

In the preparation of the alkoxysilane-modified polypropylene resin, an additive amount of the organic peroxide to 100 mass parts of the polypropylene resin as the raw material is preferably 0.001 to 10 mass parts, more preferably 0.01 to 5 mass parts, further preferably 0.05 to 5 mass parts, further preferably 0.05 to 3 mass parts, and also preferably 0.1 to 2 mass parts.

The preparation of the alkoxysilane-modified polypropylene resin can also be performed in a presence of the reaction aid having a vinyl group when a (meth)acrylic silane compound is used as the silane coupling agent. The preparation in the presence of the reaction aid having a vinyl group ensures improving a reaction efficiency of the (meth)acrylic silane compound. Specifically, when the polypropylene resin and the (meth)acrylic silane compound are melt-mixed in the presence of the organic peroxide at a temperature equal to or more than the decomposition temperature of the organic peroxide, the reaction aid having a vinyl group is mixed. In the preparation of the alkoxysilane-modified polypropylene resin, an additive amount of the reaction aid having a vinyl group to 100 mass parts of the polypropylene resin as the raw material is preferably 0.1 to 20 mass parts, more preferably 0.5 to 10 mass parts, further preferably 1 to 7 mass parts, and particularly preferably 1.5 to 5 mass parts.

The preparation of the alkoxysilane-modified polypropylene resin can also be performed simultaneously with the melt-mixing with the polypropylene resin A and the cellulose fiber described above. That is, the polypropylene resin A is molded while a part of it is alkoxysilane-modified and the dealcoholization/dehydration condensation reaction with the cellulose fiber is also developed, and thus, the resin formed body of the present invention can be obtained.

In the producing method of the present invention, subsequent to the preparation of the alkoxysilane-modified polypropylene resin, the melt-mixing with the polypropylene resin A and the cellulose fiber described above can also be performed.

A preferred form of the producing method of the present invention is as follows.

A method of producing a cellulose fiber reinforced resin formed body containing a polypropylene resin, an alkoxysilane-modified polypropylene resin, and a cellulose fiber, the method of producing the cellulose fiber reinforced resin formed body including the following steps (a) and (b).
(a) A step of mixing a polypropylene resin and a silane coupling agent in a presence of an organic peroxide at a decomposition temperature or more of the organic peroxide to cause the silane coupling agent to develop a grafting reaction to the polypropylene resin, thereby preparing an alkoxysilane-modified polypropylene resin.
(b) A step of melt-mixing the alkoxysilane-modified polypropylene resin, a cellulose fiber, and a polypropylene resin with a proportion of the alkoxysilane-modified polypropylene resin to a total quantity of the alkoxysilane-modified polypropylene resin, the cellulose fiber, and the polypropylene resin being 0.1 to 20 mass%.

The preparation of the alkoxysilane-modified polypropylene resin described above is more preferred to be performed in a presence of a reaction aid having a vinyl group as described above when a (meth)acrylic silane compound is used as the silane coupling agent (a second aspect), and further preferred to be performed in a presence of a styrene compound.

### {Applications}

The resin formed body of the present invention can be used as a product, a component, and/or a member below, which require the mechanical strength and the long durability. For example, transport equipment (automobile, motorcycle, train, aircraft, and the like), a structural member of a robot arm, a component of an amusement robot, a member of an artificial limb, a material of a home appliance, a housing of OA equipment, information processing equipment, a mobile terminal, a building material, a film for plastic greenhouse, drainage equipment, a material of a toiletry product, various kinds of tanks, a container, a sheet, a packing material, a toy, a writing material, a food product container, a bobbin, a tube, a furniture material (for example, a wall material and a handrail), a shoe, and sport goods, are included.

The material for the transport equipment includes a vehicle material. The vehicle material includes, for example, interior components, such as trims, such as a dashboard trim, a door trim, and a pillar trim, a meter panel, a meter housing, a glove compartment, a package tray, a roof head lining, a console, an instrumental panel, an arm rest, a seat, a seat back, a trunk lid, a trunk lid lower, a door inner panel, a pillar, a spare tire cover, a door knob, a light housing, and a back tray; exterior components, such as a bumper, a hood, a spoiler, a radiator grille, a fender, a fender liner, a rocker panel, a side step, a door outer panel, a side door, a back door, a roof, a roof carrier, a wheel cap cover, a side-view mirror cover, and an undercover; other components, such as a battery case, an engine cover, a fuel tank, a fuel tube, an oil filler box, an air intake duct, an air cleaner housing, an air conditioner housing, a coolant reservoir tank, a radiator reservoir tank, an window washer tank, an intake manifold, a rotating member, such as a fan and a pulley; a component, such as a wire harness protector; a connection box or a connector, and an integrally molded component, such as a front end module and a front end panel.

### EXAMPLES

While the present invention will be described in further detail based on examples, the present invention is not limited to these examples except for those specified in the present invention.

In the examples and comparative examples below, "parts" means "mass parts" unless otherwise stated.

### -Used Materials-

The following describes the used materials.
<Cellulose Fiber>
   ARBOCEL B400 (product name), manufactured by J. Rettenmaier & Söhne GmbH + Co KG
<Polypropylene Resin>
   J106MG (product name), manufactured by Prime Polymer Co., Ltd.
<Monomer for Resin Modification>
   3-(Trimethoxysilyl)propyl methacrylate, manufactured by Tokyo Chemical Industry Co., Ltd.
   Vinyltrimethoxysilane, manufactured by Tokyo Chemical Industry Co., Ltd. Glycidyl methacrylate, manufactured by Tokyo Chemical Industry Co., Ltd.
<Reaction Aid having Vinyl Group>
   Styrene, manufactured by JUNSEI CHEMICAL CO.,LTD.
   Vinyl laurate, manufactured by Tokyo Chemical Industry Co., Ltd.
   Acrylonitrile, manufactured by Tokyo Chemical Industry Co., Ltd.
   Glycidyl methacrylate, manufactured by Tokyo Chemical Industry Co., Ltd.
   α-Methylstyrene, manufactured by Tokyo Chemical Industry Co., Ltd.
   2-Hydroxypropyl methacrylate, manufactured by Tokyo Chemical Industry Co., Ltd.
<Organic Peroxide>
   Dicumyl peroxide: PERCUMYL D (product name), manufactured by NOF CORPORATION, one minute half-life temperature 175.2°C
<Maleic Anhydride-Modified Polypropylene Resin>
   Maleic anhydride-modified PP (MAH-PP): RIKEAID MG250P (product name), manufactured by RIKEN VITAMIN CO., LTD.

The following describes resin formed bodies of Examples 1 to 11 produced using a graft-modified product of a polypropylene resin by a silane coupling agent, resin formed bodies of Comparative Examples 1, 2, 5 produced using a modified product other than the graft-modified product above, and resin formed bodies of Comparative Examples 3, 4, 6 to 8 produced without using a modified product as alkoxysilane-modified polypropylene resins.

### <Example 1>

### -Preparation of Modified Resin-

An alkoxysilane-modified polypropylene resin (modified resin) was prepared as follows using a polypropylene resin (PP) as a base resin, 3-(trimethoxysilyl)propyl methacrylate as a silane coupling agent, and styrene as a reaction aid.

The polypropylene resin was put to a co-rotation twin screw extruder (product name: KZW15TW-45MG-NH, manufactured by TECHNOVEL CORPORATION) with a screw diameter of 15 mm and LID = 45, a mixed solution of the 3-(trimethoxysilyl)propyl methacrylate (SiMA), the styrene, and dicumyl peroxide was dripped with a syringe and mixed so as to have a constant proportion from a vent part for liquid addition provided in the middle of a barrel, and was extruded into a strand form with a strand die being set at 190°C. The above-described mixing was performed by adjusting 5 mass parts of the 3-(trimethoxysilyl)propyl methacrylate (SiMA), 3.75 mass parts of the styrene, and 0.2 mass part of the dicumyl peroxide to be mixed to 100 mass parts of the polypropylene resin. A polypropylene resin modified with the 3-(trimethoxysilyl)propyl methacrylate (SiMA-PP) in a pellet form was obtained through cooling and cutting.

### -Melt-Mixing and Molding-

To 79 mass parts of the polypropylene resin, 1 mass part of the SiMA-PP and 20 mass parts of the cellulose fiber were added, and after being dry-blended, it was provided to a 15 mm twin-screw extruder (product name: KZW15TW-45MG-NH, manufactured by TECHNOVEL CORPORATION). The product was melt-mixed at 170°C in the twin-screw extruder, and the molten mixture discharged from the extrusion die (strand die) set at 190°C was processed into a pellet form using a strand cutter after being water cooled. This pellet was sufficiently dried, and was subsequently provided to an injection molding machine (product name: ROBOSHOT α-S30iA, manufactured by FANUC CORPORATION), thereby obtaining a JIS-5 type dumbbell test piece (a resin formed body).

### <Example 2>

A resin formed body was obtained in a similar way to Example 1 except that the additive amount of the SiMA-PP was changed to 3 mass parts and the additive amount of the polypropylene resin was changed to 77 mass parts in Example 1.

### <Example 3>

A resin formed body was obtained in a similar way to Example 1 except that the additive amount of the SiMA-PP was changed to 5 mass parts and the additive amount of the polypropylene resin was changed to 75 mass parts in Example 1.

### <Example 4>

A resin formed body was obtained in a similar way to Example 1 except that the additive amount of the SiMA-PP was changed to 5 mass parts, the additive amount of the cellulose fiber was changed to 1 mass part, and the additive amount of the polypropylene resin was changed to 94 mass parts in Example 1.

### <Example 5>

A resin formed body was obtained in a similar way to Example 1 except that the additive amount of the SiMA-PP was changed to 5 mass parts, the additive amount of the cellulose fiber was changed to 5 mass parts, and the additive amount of the polypropylene resin was changed to 90 mass parts in Example 1.

### <Example 6>

A resin formed body was obtained in a similar way to Example 1 except that the additive amount of the SiMA-PP was changed to 5 mass parts, the additive amount of the cellulose fiber was changed to 10 mass parts, and the additive amount of the polypropylene resin was changed to 85 mass parts in Example 1.

### <Example 7>

A resin formed body was obtained in a similar way to Example 1 except that the additive amount of the SiMA-PP was changed to 7 mass parts, the cellulose fiber was changed to 30 mass parts, and the polypropylene resin was changed to 63 mass parts in Example 1.

### <Example 8>

A resin formed body was obtained in a similar way to Example 1 except that the additive amount of the SiMA-PP was changed to 15 mass parts, the additive amount of the cellulose fiber was changed to 40 mass parts, and the additive amount of the polypropylene resin was changed to 45 mass parts in Example 1.

### <Example 9>

A resin formed body was obtained in a similar way to Example 1 except that the additive amount of the SiMA-PP was changed to 20 mass parts, the additive amount of the cellulose fiber was changed to 50 mass parts, and the additive amount of the polypropylene resin was changed to 30 mass parts in Example 1.

### <Example 10>

A resin formed body was obtained in a similar way to Example 1 except that the silane coupling agent used in "Preparation of Modified Resin" was changed to vinyltrimethoxysilane (VTMS), furthermore, without adding the styrene, a polypropylene resin (VTMS-PP) modified with the vinyltrimethoxysilane was obtained, 5 mass parts of the VTMS-PP was used as the modified resin, and the additive amount of the polypropylene resin was changed to 75 mass parts in Example 1.

### <Example 11>

A resin formed body was obtained in a similar way to Example 3 except that a SiMA-PP modified without adding the styrene was used in "Preparation of Modified Resin" in Example 3.

### <Comparative Example 1>

A resin formed body was obtained in a similar way to Example 1 except that the SiMA-PP used in "Melt-Mixing and Molding" was changed to a maleic anhydride-modified polypropylene PP (MAH-PP) in Example 1.

### <Comparative Example 2>

A resin formed body was obtained in a similar way to Example 1 except that the silane coupling agent used in "Preparation of Modified Resin" was changed to glycidyl methacrylate (GMA), furthermore, without adding the styrene, a polypropylene resin modified with the glycidyl methacrylate (GMA-PP) was obtained, 5 mass parts of the GMA-PP was used as the modified resin, and the additive amount of the polypropylene resin was changed to 75 mass parts in Example 1.

### <Comparative Example 3>

A resin formed body was obtained in a similar way to Example 1 except that the modified resin was not added in "Melt-Mixing and Molding," the additive amount of the polypropylene resin was changed to 80 mass parts, and the additive amount of the cellulose fiber was changed to 20 mass parts in Example 1.

### <Comparative Example 4>

An aqueous dispersion with 20 mass% of the cellulose fiber and 1 mass% of SiMA was produced and was subject to a stirring process for two hours at room temperature. The aqueous dispersion after the process was filtered, and the cellulose fiber that remained as a residue was filtered twice with water to wash away an unreacted silane coupling agent. The cellulose fiber recovered after the washing was dried for all night at 120°C in an oven. Thus, the cellulose fiber whose surface was processed with the silane coupling agent was obtained.

A resin formed body was obtained in a similar way to Example 1 except that the modified resin was not added in "Melt-Mixing and Molding," the additive amount of the polypropylene resin was changed to 80 mass parts, and 20 mass parts of the cellulose fiber was changed to 20 mass parts of the cellulose fiber whose surface was processed with the silane coupling agent described above in Example 1.

### <Comparative Example 5>

A resin formed body was obtained in a similar way to Example 1 except that the base resin used in "Preparation of Modified Resin" was changed to a high-density polyethylene resin (HDPE), the silane coupling agent was changed to vinyltrimethoxysilane (VTMS), a high-density polyethylene resin modified with the vinyltrimethoxysilane (VTMS-HDPE) was obtained without adding the styrene, 5 mass parts of the VTMS-HDPE was used as the modified resin, and 79 mass parts of the polypropylene resin was changed to 75 mass parts of the HDPE in Example 1.

### <Comparative Example 6>

A resin formed body was obtained in a similar way to Example 1 except that the base resin used in "Preparation of Modified Resin" was changed to a high-density polyethylene resin (HDPE), the silane coupling agent was changed to vinyltrimethoxysilane (VTMS), a molten mixture of the vinyltrimethoxysilane and the high-density polyethylene resin (VTMS/HDPE) was obtained without adding the styrene or the dicumyl peroxide (peroxide), 5 mass parts of this molten mixture was used instead of the modified resin, and 79 mass parts of the polypropylene resin was changed to 75 mass parts of the HDPE in Example 1. In the above-described molten mixture, the graft polymerization reaction to the HDPE via the ethylenically unsaturated group of the VTMS was not developed, and therefore, an alkoxysilane-modified polyethylene resin was not generated. The VTMS interacts with the cellulose fiber and the polyethylene resin via its functional group.

### <Comparative Example 7>

A resin formed body was obtained in a similar way to Example 1 except that the silane coupling agent used in "Preparation of Modified Resin" was changed to vinyltrimethoxysilane (VTMS), a molten mixture of the vinyltrimethoxysilane and the polypropylene resin (VTMS/PP) was obtained without further adding the styrene or the dicumyl peroxide (peroxide), 5 mass parts of this molten mixture was used instead of the modified resin, and the additive amount of the polypropylene resin was changed to 75 mass parts in Example 1. In the above-described molten mixture, the graft polymerization reaction to the polypropylene resin via the ethylenically unsaturated group of the VTMS was not developed, and therefore, an alkoxysilane-modified polypropylene resin was not generated. The VTMS interacts with the cellulose fiber and the polyethylene resin via its functional group.

### <Comparative Example 8>

A resin formed body was obtained in a similar way to Comparative Example 5 except that the modified resin was not added, the additive amount of the high-density polyethylene resin was changed to 80 mass parts, and the additive amount of the cellulose fiber was changed to 20 mass parts in Comparative Example 5.

The obtained dumbbell test pieces (the resin formed bodies) were subject to the following tests, and the results are shown in Table 1.

### [Tensile Strength Test]

Tensile strengths were evaluated as indicators of mechanical strengths.

The dumbbell test pieces obtained above were subject to tensile tests using an autograph precision universal testing machine (manufactured by Shimadzu Corporation) based on Japanese Industrial Standard K7161, and tensile strengths (MPa) were measured. The test condition was a room temperature (25°C), a gauge length of 60 mm, and a tension speed of 50 mm/minute.

### [Durability Test]

Changes in the tensile strengths before and after a heat-moisture treatment were evaluated as indicators of durability under a high temperature and high humidity.

This test is based on the method of moisture, rain and spray test for automobile parts described in Japanese Industrial Standard D0203.

The dumbbell test pieces obtained above were put into a thermo-hygrostat bath (product name: PSL-2J, manufactured by ESPEC CORP.), and were allowed to stand under an environment with a temperature of 85°C and a relative humidity of 95% for 1,000 hours. The dumbbell test pieces taken out of the thermo-hygrostat bath were dried at 100°C for 24 hours, and thereafter, were allowed to stand under an environment with a temperature of 25°C and a relative humidity of 50% for seven days. Thus, heat-moisture treated products of the dumbbell test pieces were obtained.

The dumbbell test pieces after the heat-moisture treatment were subject to tensile tests in accordance with the above-described Tensile Strength Test. With the tensile strengths before being exposed under the environment with the temperature of 85°C and the relative humidity of 95% (before the heat-moisture treatment) being σ₀ₕ and the tensile strengths of the heat-moisture treated products being σ₁₀₀₀ₕ, values of ratios of the tensile strengths of the heat-moisture treated products of the dumbbell test pieces to the tensile strengths of the dumbbell test pieces before the heat-moisture treatment (σ₁₀₀₀ₕ/σ₀ₕ, tensile strength ratio) were calculated.

When the tensile strength ratio σ₁₀₀₀ₕ/σ₀ₕ before and after the heat-moisture treatment is 1, it means that the tensile strength before the heat-moisture treatment (initial) is maintained without a change after the heat-moisture treatment as well. Furthermore, when the tensile strength ratio decreases by 0.1, it means that a tensile altitude decreases by 10% after the heat-moisture treatment. Here, a degradation by an accelerated aging test of 1,000 hours of the above-described heat-moisture treatment corresponds to a degradation caused by a period of use of approximately seven years in an actual environment, in accordance with the 10°C half-life rule. In a long durable member with a long design life (for example, ten years or more), such as an automobile parts, a decrease in the designed mechanical strength by more than 10% during the period of use may be determined as poor long-term reliability. In view of this, from an aspect of application to the long durable member, the tensile strength ratio is preferably 0.9 or more.

For the respective dumbbell test piece, qualities of external appearances (before the heat-moisture place and after the treatment) were also evaluated as a preferable property.

### [Appearance Observation]

The dumbbell test pieces obtained above (before the heat-moisture treatment) were visually observed for entire appearances, and were evaluated with the following criteria.
A: No spot with a largest diameter of 3 mm or more was observed in plan view.
B: One to three spots with a largest diameter of 3 mm or more were observed in plan view.
C: Four or more spots with a largest diameter of 3 mm or more occurred and/or a surface had stickiness caused by an eluted material in plan view.

The "largest diameter" means a distance that is the maximum distance on a straight line through an inside of the spot from one point on an outer periphery of the spot to another point in plan view.

### [Appearance Observation after Heat-Moisture Treatment]

The dumbbell test pieces after the above-described heat-moisture treatment were visually observed for entire appearances, and were evaluated with the following criteria.
A: No spot with a largest diameter of 3 mm or more was observed in plan view.
B: One to three spots with a largest diameter of 3 mm or more were observed in plan view.
C: Four or more spots with a largest diameter of 3 mm or more occurred and/or a surface had stickiness caused by an eluted material in plan view.

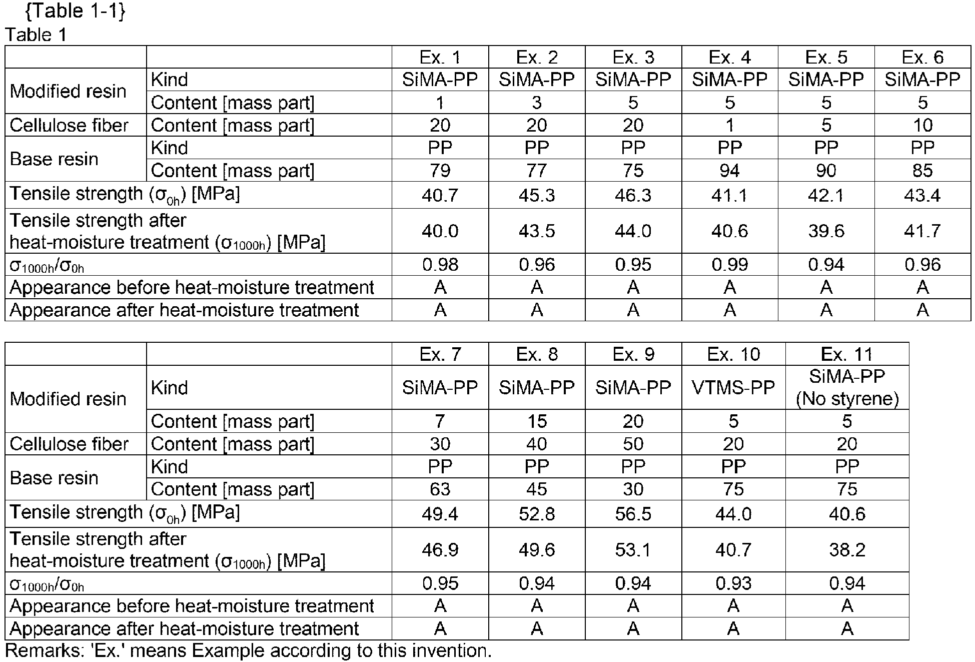

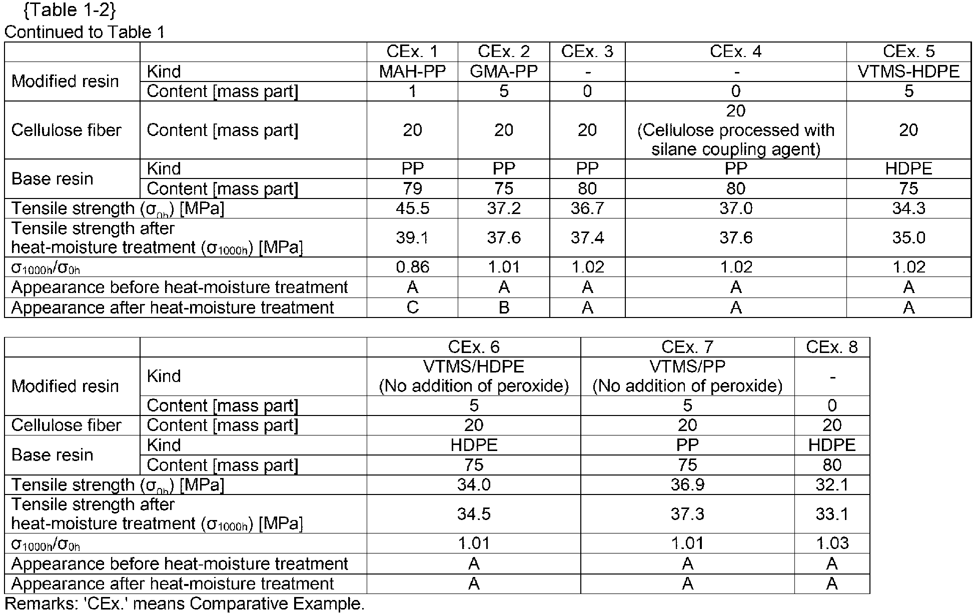

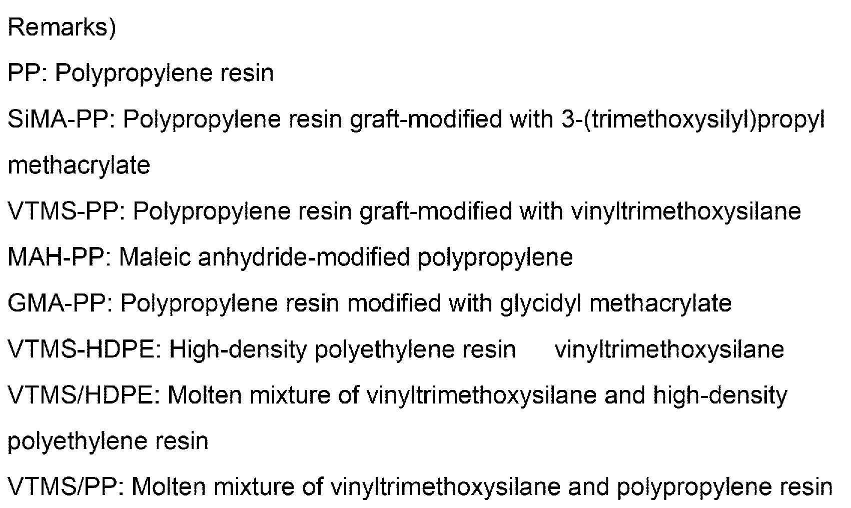

As is clear from the results shown in Table 1, the resin formed bodies in Comparative Examples that do not satisfy the composition specified in the present invention cannot achieve both the initial tensile strength and the durability at the same time at a high level.

The resin formed body to which the maleic anhydride-modified polypropylene resin was added described in Comparative Example 1 had the initial tensile strength higher than that of the resin formed body to which the modified PP was not added described in Comparative Example 3, but had σ₁₀₀₀ₕ/σ₀ₕ below 0.90 and also presented a poor appearance of four or more spots exceeding the largest diameter of 3 mm and stickiness caused by an eluted material after the heat-moisture treatment. The cellulose fiber reinforced resin to which the maleic anhydride-modified resin was added like Comparative Example 1 is considered that a succinic anhydride group derived from the maleic anhydride-modified resin forms an ester bond with the hydroxyl group of the cellulose fiber, and is actually excellent in initial tensile strength. On the other hand, the heat-moisture treatment causes the ester bond between the cellulose fiber and the maleic anhydride-modified resin to be broken by hydrolysis and the succinic anhydride group of the maleic anhydride-modified resin to generate an acid, and therefore, it is considered that the degradation of the cellulose fiber easily progresses to result in poor durability.

The resin formed body in Comparative Example 2 was high in durability, but the initial tensile strength was approximately the same as that of Comparative Example 3, and thus, the strengthening effect by the cellulose fiber was not sufficiently obtained. The cellulose fiber reinforced resin to which the polypropylene resin modified with the glycidyl methacrylate (in other words, an epoxy-modified polypropylene resin) was added like Comparative Example 2 is considered to have an insufficient interface adherence between an epoxy group derived from the epoxy-modified polypropylene resin and the cellulose fiber.

With the resin formed body in Comparative Example 3, the strengthening effect by the cellulose fiber is not sufficiently obtained. This is considered due to a poor interface adherence between the cellulose fiber and the polypropylene resin.

The resin formed body in Comparative Example 4 used the cellulose fiber whose surface was reformed with the silane coupling agent by referring to Patent Literature 2, but the initial tensile strength was approximately the same as that of Comparative Example 3, and thus, the strengthening effect by the cellulose fiber was not sufficiently obtained. When the surface of the cellulose fiber is reformed with the silane coupling agent like Comparative Example 4, a side of the polypropylene resin does not have a functional group that contributes to the adherence force between the cellulose fiber and the polypropylene resin. In view of this, the silane coupling agent only acts as a dispersant of the cellulose fiber, and is considered to have a limitation in improving the adherence in the interface between the cellulose fiber and the polypropylene resin.

The resin formed bodies in Comparative Example 5 and 6 used the VTMS-HDPE or the VTMS/HDPE as the silane-containing polymer by referring to Patent Literature 5, but the initial tensile strengths were approximately the same as that of Comparative Example 8 to which the VTMS-HDPE or the VTMS/HDPE was not added, and thus, the strengthening effect by the cellulose fiber was not sufficiently obtained.

The resin formed body in Comparative Example 7 had a composition to which the peroxide was not added when the alkoxysilane-modified polypropylene resin was prepared, and the initial tensile strength was approximately the same as that of Comparative Example 3. When the silane coupling agent is not grafted to the polypropylene like Comparative Example 7, the interface between the polypropylene and the cellulose fiber is not sufficiently adhered, and the strengthening effect by the cellulose fiber is not sufficiently obtained.

In contrast to this, it is seen that the resin formed bodies that satisfies the specification of the present invention had the initial tensile strength high with respect to that of Comparative Example 3 and this high tensile strength was maintained at a high level (σ₁₀₀₀ₕ/σ₀ₕ is 0.90 or more) even after the heat-moisture treatment for 1,000 hours. Thus, the resin formed body of the present invention exhibits the initial tensile strength that can be applied to automobile components and structure members and ensures maintaining the tensile strength under a high temperature and high humidity over a long period of time. The reason that the resin formed body of the present invention exhibits the above-described excellent operational advantage is considered because the employment of the alkoxysilane-modified polypropylene resin as a compatibilizer not only ensures bringing out the strengthening effect of the cellulose fiber but also ensures sustaining the strengthening effect by reducing the degradation of the cellulose fiber.

Next, for Examples 13 to 18, there are described examples in which kinds of reaction aids having a vinyl group used in combination were changed in the aspect in which the silane coupling agent used in the preparation of the alkoxysilane-modified polypropylene resin was (trimethoxysilyl)alkyl (meth)acrylate. Example 12 is an example that used no reaction aid having a vinyl group.

### <Example 12>

A resin formed body was obtained in a similar way to Example 1 except that a SiMA-PP modified without adding styrene was used in "Preparation of Modified Resin," the additive amount of the SiMA-PP was changed to 10 mass parts, and the additive amount of the polypropylene resin was changed to 70 mass parts in Example 1.

### <Example 13>

A resin formed body was obtained in a similar way to Example 1 except that the styrene was changed to 8.15 mass parts of vinyl laurate and a SiMA-PP modified with it was used in "Preparation of Modified Resin," the additive amount of the SiMA-PP was changed to 10 mass parts, and the additive amount of the polypropylene resin was changed to 70 mass parts in Example 1. Note that, the Q-value of the vinyl laurate was 0.011, and the additive amount thereof was a molar quantity equal to that of the styrene in Example 1.

### <Example 14>

A resin formed body was obtained in a similar way to Example 1 except that the styrene was changed to 1.91 mass parts of acrylonitrile and a SiMA-PP modified with it was used in "Preparation of Modified Resin," the additive amount of the SiMA-PP was changed to 10 mass parts, and the additive amount of the polypropylene resin was changed to 70 mass parts in Example 1. Note that, the Q-value of the acrylonitrile was 0.48, and the additive amount thereof was a molar quantity equal to that of the styrene in Example 1.

### <Example 15>

A resin formed body was obtained in a similar way to Example 1 except that the styrene was changed to 5.13 mass parts of glycidyl methacrylate and a SiMA-PP modified with it was used in "Preparation of Modified Resin," the additive amount of the SiMA-PP was changed to 10 mass parts, and the additive amount of the polypropylene resin was changed to 70 mass parts in Example 1. Note that, the Q-value of the glycidyl methacrylate was 0.96, and the additive amount thereof was a molar quantity equal to that of the styrene in Example 1.

### <Example 16>

A resin formed body was obtained in a similar way to Example 1 except that the styrene was changed to 4.25 mass parts of α-methylstyrene and a SiMA-PP modified with it was used in "Preparation of Modified Resin," the additive amount of the SiMA-PP was changed to 10 mass parts, and the additive amount of the polypropylene resin was changed to 70 mass parts in Example 1. Note that, the Q-value of the α-methylstyrene was 0.97, and the additive amount thereof was a molar quantity equal to that of the styrene in Example 1.

### <Example 17>

A resin formed body was obtained in a similar way to Example 1 except that the additive amount of the SiMA-PP was changed to 10 mass parts and the additive amount of the polypropylene resin was changed to 70 mass parts in Example 1. Note that, the Q-value of the styrene was 1.00.

### <Example 18>

A resin formed body was obtained in a similar way to Example 1 except that the styrene was changed to 5.19 mass parts of 2-hydroxypropyl methacrylate and a SiMA-PP modified with it was used in "Preparation of Modified Resin," the additive amount of the SiMA-PP was changed to 10 mass parts, and the additive amount of the polypropylene resin was changed to 70 mass parts in Example 1. Note that, the Q-value of the 2-hydroxypropyl methacrylate was 4.38, and the additive amount thereof was a molar quantity equal to that of the styrene in Example 1.

The obtained dumbbell test pieces (resin formed bodies) were subject to [Tensile Strength Test], [Durability Test], [Appearance Observation], and [Appearance Observation after Heat-Moisture Treatment] described above, and the results are shown in Table 2.

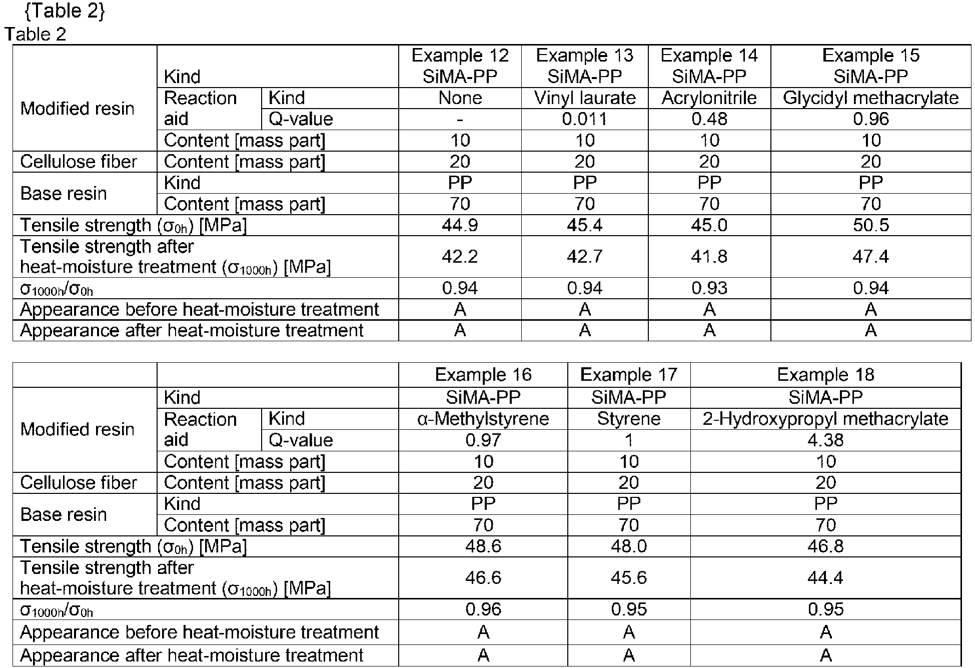

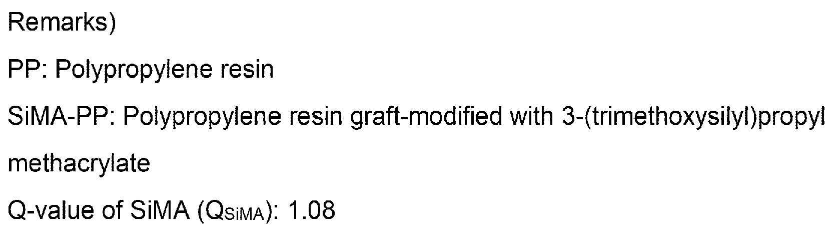

It can be seen that the resin formed bodies in Example 12 to 18 satisfying the specification of the present invention had the initial tensile strengths high with respect to that of Comparative Example 3 and maintained this high tensile strength at a high level (σ₁₀₀₀ₕ/σ₀ₕ is 0.90 or more) even after the heat-moisture treatment for 1,000 hours.

While the resin formed bodies in Example 13 and Example 14 used the reaction aids having a vinyl group when the alkoxysilane-modified polypropylene resin is produced, the initial tensile strengths were approximately the same as that of the resin formed body in Example 12 that used no reaction aid having a vinyl group. The reaction aids used in Examples 13 and 14 have the Q-values of less than 0.54, which is a median between the Q-value of 0.009 of the propylene and the Q-value of 1.08 of 3-(trimethoxysilyl)propyl methacrylate, and when the Q-value of the reaction aid is less than 0.54, the reaction aid is less likely to form radicals, and therefore, it is considered that the SiMA monomer is easily grafted to the polypropylene resin without the reaction aid. Therefore, the grafting rate of the SiMA monomer is not improved compared with the case where the reaction aid is not used, and thus, it is considered that the improvement in strengthening effect by the cellulose fiber was limited.

On the other hand, the resin formed bodies in Example 15 to 18 used the reaction aids having a vinyl group when the alkoxysilane-modified polypropylene resin is produced. In these cases, the initial tensile strengths were improved compared with the resin formed body in Example 12 that used no reaction aid having a vinyl group. The reaction aids used in Examples 15 to 18 have the Q-values of 0.54 to 5.00 or less, and it is considered that the reaction aids are easily grafted to the polypropylene resin. Therefore, it is considered that the reaction aid grafted to the polypropylene resin polymerized with the SiMA monomer to, for example, increase the grafting rate of the SiMA monomer, and therefore, the strengthening effect by the cellulose fiber could be more effectively brought out.

Having described our invention as related to the embodiments and Examples, it is our intention that the invention not be limited by any of the details of the description, unless otherwise specified, but rather be construed broadly within its spirit and scope as set out in the accompanying claims.

This application claims priority on Patent Application No. 2020-119781 filed in Japan on July 13, 2020, which is entirely herein incorporated by reference.

## Claims

1. A cellulose fiber reinforced resin formed body, which is obtainable by molding a cellulose fiber reinforced resin composition,
the cellulose fiber reinforced resin composition comprising:
a polypropylene resin,
an alkoxysilane-modified polypropylene resin, and
a cellulose fiber.

2. The cellulose fiber reinforced resin formed body according to Claim 1, wherein the alkoxysilane-modified polypropylene resin is a graft-modified product of a polypropylene resin which is obtainable by using a silane coupling agent having a group containing an ethylenically unsaturated group and an alkoxysilyl group.

3. The cellulose fiber reinforced resin formed body according to Claim 2, wherein the silane coupling agent is vinyltrimethoxysilane.

4. The cellulose fiber reinforced resin formed body according to Claim 2, wherein the silane coupling agent is (trimethoxysilyl)alkyl (meth)acrylate.

5. The cellulose fiber reinforced resin formed body according to Claim 4, wherein the alkoxysilane-modified polypropylene resin is a graft-modified product of a polypropylene resin which is obtainable by using the silane coupling agent and a reaction aid having a vinyl group.

6. The cellulose fiber reinforced resin formed body according to Claim 5, wherein the reaction aid having a vinyl group has a Q-value of 0.010 to 5.00.

7. The cellulose fiber reinforced resin formed body according to Claim 5, wherein the reaction aid having a vinyl group has a Q-value of 0.54 to 5.00.

8. The cellulose fiber reinforced resin formed body according to any one of Claims 5 to 7, wherein the reaction aid having a vinyl group is at least one kind of a styrene compound and a (meth)acrylate compound.

9. The cellulose fiber reinforced resin formed body according to any one of Claims 5 to 8, wherein the reaction aid having a vinyl group is a styrene compound.

10. The cellulose fiber reinforced resin formed body according to any one of Claims 1 to 9, wherein, in the cellulose fiber reinforced resin formed body, a content of the alkoxysilane-modified polypropylene resin is 0.1 to 20 mass%.

11. A method of producing the cellulose fiber reinforced resin formed body according to any one of Claims 1 to 9, comprising the following steps (a) and (b):
(a) a step of mixing a polypropylene resin and a silane coupling agent in a presence of an organic peroxide at a decomposition temperature or more of the organic peroxide to cause the silane coupling agent to develop a grafting reaction to the polypropylene resin, thereby preparing an alkoxysilane-modified polypropylene resin, and
(b) a step of melt-mixing the alkoxysilane-modified polypropylene resin, a cellulose fiber, and a polypropylene resin with a proportion of the alkoxysilane-modified polypropylene resin to a total quantity of the alkoxysilane-modified polypropylene resin, the cellulose fiber, and the polypropylene resin being 0.1 to 20 mass%.

12. The method of producing the cellulose fiber reinforced resin formed body according to Claim 11, wherein the preparation of the alkoxysilane-modified polypropylene resin is performed in a presence of a reaction aid having a vinyl group.

13. The method of producing the cellulose fiber reinforced resin formed body according to Claim 12, wherein the preparation of the alkoxysilane-modified polypropylene resin is performed in a presence of a styrene compound.
